Europäisches Patentamt

European Patent Office

Office européen des brevets

(11) Veröffentlichungsnummer: **0 520 079 A1**

## (12) EUROPÄISCHE PATENTANMELDUNG

(21) Anmeldenummer: **91110592.2**

(22) Anmeldetag: **26.06.91**

(51) Int. Cl.5: **H04Q 11/04**

(43) Veröffentlichungstag der Anmeldung:
**30.12.92 Patentblatt 92/53**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Rudolf, Hans-Werner, Dr. rer. nat.**
**Dr.-Ing.**
**Wörthstrasse 13**
**W-8000 München 80(DE)**
Erfinder: **Stader, Harald, Dipl.-Ing.**
**Starnbergerstrasse 21**
**W-8000 München 71(DE)**
Erfinder: **Wingerath, Norbert, Dipl.-Ing.**
**Stiegelstrasse 18**
**W-7141 Schwieberdingen(DE)**

(54) **Universelle Anschlussbaugruppe eines digitalen Vermittlungssystems.**

(57) Bisher werden für Analogteilnehmeranschlüsse und ISDN-Teilnehmeranschlüsse unterschiedliche Anschlußbaugruppen verwendet. Dies erfordert Entwicklungs- und Fertigungsaufwand für beide Baugruppentypen.

Um diesen Aufwand zu vermeiden, wird erfindungsgemäß nur mehr eine universelle Anschlußbaugruppe entwickelt, deren Betriebsweise in Abhängigkeit des jeweils angeschlossenen Teilnehmertyps softwaremäßig eingestellt wird.

FIG 1

EP 0 520 079 A1

In einem digitalen elektronischen Vermittlungssystem werden für Analogteilnehmeranschlüsse und ISDN-Teilnehmeranschlüsse unterschiedliche Anschlußbaugruppen verwendet. Dies erfordert Entwicklungs- und Fertigungsaufwand für die beiden Baugruppentypen. Außerdem muß bei Umrüsten eines Teilnehmers von Analogauf ISDN-Anschluß am Hauptverteiler der Vermittlungsstelle umrangiert werden, wenn die beiden Anschlußbaugruppentypen nicht dieselbe Anzahl von Anschlußschaltungen erhalten.

Der Erfindung liegt die Aufgabe zugrunde, die obengenannten Nachteile zu vermeiden.

Diese Aufgabe wird durch die Merkmale des Anspruchs 1 gelöst.

Die Anschlußbaugruppe gemäß Anspruch 3 besitzt insbesondere den Vorteil, daß nicht für jeden Leitungsabschlußbaustein eine komplexe und damit teure Signalverarbeitung mit Hilfe eines Signalverarbeitungsbausteins benötigt wird.

Die Anschlußbaugruppe gemäß Anspruch 4 besitzt insbesondere den Vorteil, daß auf eine Koppeleinrichtung in Form eines Busses gemäß der Ausführungsform in Anspruch 3 verzichtet werden kann.

Es folgt die Figurenliste der Zeichnung:

Fig. 1    zeigt eine spezielle erfindungsgemäße Anschlußbaugruppe eines Vermittlungssystems,

Fig. 2    zeigt einen speziellen erfindungsgemäßen Leitungsabschlußbaustein einer Anschlußbaugruppe.

Im folgenden wird die Erfindung anhand eines Ausführungsbeispiels näher erläutert.

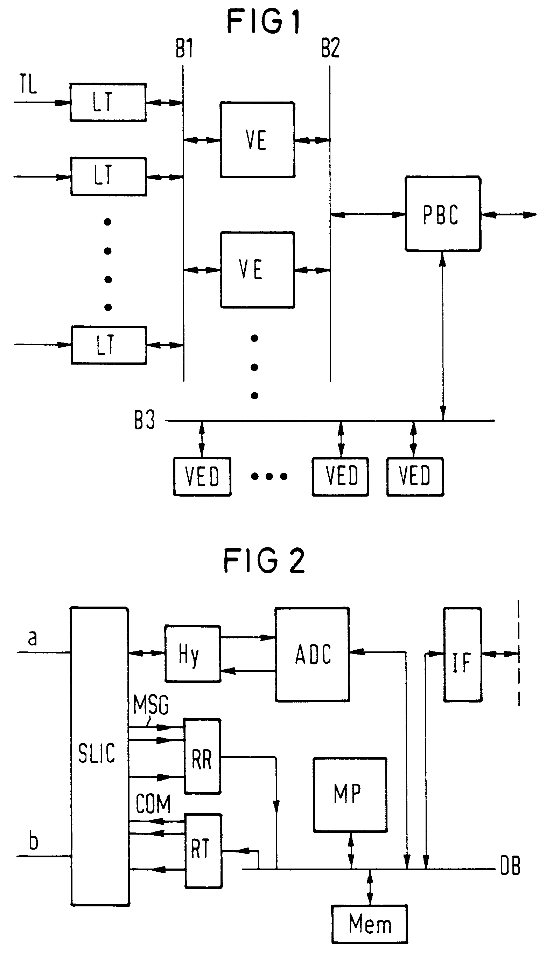

FIG 1 zeigt wie bereits erwähnt eine spezielle erfindungsgemäße Anschlußbaugruppe eines Vermittlungssystems. Die Anschlußbaugruppe umfaßt Leitungsabschlußbausteine LT, Signalverarbeitungsbausteine VE, einen Controllerbaustein PBC, sowie Verarbeitungsbausteine VED.

Die Leitungsabschlußbausteine sind über einen ersten Bus B1 jeweils einem Signalverarbeitungsbaustein zugeordnet und realisieren die physikalische Schnittstelle zwischen Teilnehmerleitung TL und Vermittlungssystem. Insbesondere werden durch die Leitungsabschlußbausteine die sogenannten BORSHT-Funktionen realisiert, d.h. die Funktionen der Speisung (Battery), Überspannungsschutz (Overvoltage), Rufeinspeisung (Ringing), Signale und Überwachung (Signals and Supervision), Gabelschaltung (Hybrid) und der Prüfung (Testing). Zusätzlich beinhaltet ein Leitungsabschlußbaustein einen Umwandlerbaustein, der im Falle eines Analogteilnehmers für die Digitalisierung der von der Teilnehmerleitung empfangenen analogen Signale sorgt, und im Falle eines ISDN-Teilnehmers für eine entsprechende Umcodierung. Die diesbezüglich unterschiedliche Betriebsart des Leitungsabschlußbausteins wird über einen zweiten Bus B2 durch entsprechende Steuersignale des Signalverarbeitungsbausteins eingestellt.

Die Signalverarbeitungsbausteine befreien die von den Leitungsabschlußbausteinen empfangenen digitalen Signale von Störungen, die durch die Übertragung auf der Teilnehmerleitung und den physikalischen Leitungsabschluß durch die Leitungsabschlußbausteine bedingt sind. Durch den Controllerbaustein werden jedem Signalverarbeitungsbaustein jeweils mehrere Leitungsabschlußbausteinen zugeordnet. Bei den durch die Leitungsabschlußbausteine bedingten Störungen handelt es sich beispielsweise um Echoeffekte, die durch die Fehlanpassung der Gabelschaltung auftreten. Um die genannten Störungen zu eliminieren, sind in den Signalverarbeitungsbausteinen Funktionen wie Filterung, Impedanzanpassung, 2 Draht/4 Draht-Anpassung und Echokompensation sowohl für Analog- als auch für ISDN-Teilnehmer implementiert. Die Signalverarbeitungsbausteine stellen für die Leitungsabschlußbausteine einen Pool von Verarbeitungskapazität dar, die der Controllerbaustein je nach Bedarf vergeben kann.

Der Controllerbaustein dient der Steuerung der Anschlußbaugruppe, der Abwicklung des D-Kanal-Sicherungsprotokolls (LAPD-Protokoll) zwischen Teilnehmer und Vermittlungssystem, sowie dem Multiplexen der Teilnehmernutzkanäle auf eine PCM-Übertragungsstrecke in Richtung des entsprechenden Gruppenkopplers der übergeordneten Anschlußgruppe. Er ist über den zweiten Bus B2 mit den Signalverarbeitungsbausteinen verbunden, sowie über einen dritten Bus (B3) mit weiteren Verarbeitungsbausteinen verbunden, die zur Erweiterung seiner Verarbeitungskapazität bezüglich der Durchführung des LAPD Protokolls herangezogen werden.

Der Controllerbaustein unterhält des weiteren eine Kommunikationsbeziehung zu dem Steuerungsbaustein der übergeordneten Anschlußgruppe, über die unter anderem Informationen über den Teilnehmeranschlußtyp erhält, d.h. ob es sich um einen ISDN-Teilnehmer oder einen Analogteilnehmer handelt. Ändert sich bei einem Teilnehmeranschluß der Teilnehmertyp, so benachrichtigt der Controllerbaustein der Anschlußbaugruppe den für den betreffenden Teilnehmeranschluß zuständigen Signalverarbeitungsbaustein, damit dieser seine Betriebsart entsprechend einstellen kann, d.h. die Art und Weise wie er die von dem betreffenden Leitungsabschlußbaustein empfangenen digitalisierten Signale verarbeitet.

FIG 2 zeigt, wie bereits erwähnt, einen speziellen erfindungsgemäßen Leitungsabschlußbaustein einer Anschlußbaugruppe. Der Leitungsabschlußbaustein umfaßt einen Hochvoltbaustein SLIC, eine Gabelschaltung Hy, einen Umwandlerbaustein ADC, Sende- und Empfangsregister RT und RR, einen Mikroprozessor MP mit dazugehörigem Speicher Mem, einen Schnittstellenbaustein IF, sowie einen Bus DB, über den alle genannten Bausteine miteinander verbunden sind.

Als Hochvoltbaustein SLIC, der die Teilnehmerleitung (Adern a und b) treibt, muß ein solcher ausgewählt werden, der einerseits den für die Übertragung vom ISDN-Signalen notwendigen Frequenzumfang hat und gleichzeitig den für Analogteilnehmer erforderlichen Rauschabstand gewährleistet. Erste Untersuchungen am Hochvoltbaustein L3000 (Flexiwatt 15) der Firma SGS-Thomson, der im Telecommunication IC Databook der Firma von März 89 beschrieben ist, haben ergeben, daß dieser Baustein schon in der jetzigen Ausführung die genannten Eigenschaften erfüllt.

Der Hochvoltbaustein beinhaltet des weiteren die Funktionen der Speisung, des Überspannungsschutzes, der Rufeinspeisung, und beinhaltet analoge Auswerte- und Schalteinrichtungen bezüglich der Funktionen Signalisierung und Überwachung, sowie Prüfung.

Die Ausgänge der genannten analogen Auswerteeinrichtugen des Hochvoltbausteins sind über Meldeleitungen MSG mit den Empfangsregistern RR verbunden, während die Eingänge der genannten Schalteinrichtungen über Steuerleitungen CDM mit den Senderegistern RT verbunden sind.

Der Leitungsabschlußbaustein sorgt wie bereits erwähnt im Falle eines Analogteilnehmers für die Analog-Digital-Wandlung bzw. Digital-Analog-Wandlung, sowie im Falle eines ISDN-Teilnehmers für die Umcodierung der digitalen Signale zwischen Teilnehmer und Vermittlungsstelle. Diese Umwandlung wird, genauer betrachtet, durch den Umwandlerbaustein ADC durchgeführt, dessen Betriebsweise in Abhängigkeit des angeschlossenen Teilnehmertyps durch den Mikroprozessor MP eingestellt wird.

Der Mikroprozessor steuert den Leitungsabschlußbaustein, indem er sowohl die Betriebsweise des Umwandlerbausteins ADC, als auch die Betriebsweise des Hochvoltbausteins über die Senderegister RT einstellt.
Des weiteren sorgt der Mikroprozessor für den Aufbau der Rahmenstruktur zum bidirektionalen Transfer von Daten zwischen Leitungsabschlußbaustein und Signalverarbeitungsbaustein. Der Rahmen beinhaltet zwei Nutzkanäle (Sprache oder Daten), die jeweils ein Byte in Anspruch nehmen, einen Überwachungskanal, der ebenfalls ein Byte in Anspruch nimmt, einen Signalisierungskanal (D-Kanal), der zwei Bits in Anspruch nimmt, sowie einen Kontroll- und Meldekanal, der sechs Bits in Anspruch nimmt und der der Kommunikation zwischen Leitungsabschlußbaustein und zugeordnetem Signalverarbeitungsbaustein dient. Die für den Signalisierungskanal notwendigen Daten entnimmt der Mikroprozessor im Falle eines Analog-Teilnehmers den Empfangsregistern RR.

**Patentansprüche**

1. Anschlußbaugruppe eines digitalen Vermittlungssystems, die folgende Bausteine beinhaltet:
    a) Leitungsabschlußbausteine (LT), die die Teilnehmerleitung abschließen und die Teilnehmerleitungssignale in Richtung Vermittlungssystem systemintern codieren,
    b) wenigstens einen Signalverarbeitungsbaustein (VE), der die durch die Leitungsabschlußbausteine systemintern codierten Teilnehmerleitungssignale empfängt und von Störungen befreit, die durch die Übertragung und den physikalischen Leitungsabschluß durch die Leitungsabschlußbausteine bedingt sind,
    c) wenigstens einen Controllerbaustein (PBC) zur Steuerung der Anschlußgruppe, und bei der
    d) die Bearbeitung der Teilnehmerleitungssignale durch die Leitungsabschlußbausteine und Signalverarbeitungsbausteine in Abhängigkeit des jeweils angeschlossenen Teilnehmertyps erfolgt.

2. Anschlußbaugruppe gemäß Anspruch 1, **dadurch gekennzeichnet,** daß
    a) die Anschlußbaugruppe bezüglich der obengenannten Bearbeitung zwischen ISDN-Teilnehmer und Analogteilneher wechseln kann,
    b) die Leitungsabschlußbausteine so ausgelegt sind, daß sie einerseits den für die Übertragung von ISDN-Signalen notwendigen Frequenzumfang haben und gleichzeitig den für Analogsignale erforderlichen Rauschabstand gewährleisten.

3. Anschlußbaugruppe gemäß Anspruch 2, **dadurch gekennzeichnet,** daß
    a) die Leitungsabschlußbausteine (LT) über einen Bus (B1) mit den Signalverarbeitungsbausteinen (VE) verbunden sind,
    b) mehrere Leitungsabschlußbausteine jeweils einem Signalverarbeitungsbaustein (VE) zugeordnet werden.

4. Anschlußbaugruppe gemaß Anspruch 2, **dadurch gekennzeichnet,** daß jeder Signalverarbeitungsbaustein direkt mit einem Leitungsabschlußbaustein verbunden ist.

# FIG 1

# FIG 2

Europäisches
Patentamt

**EUROPÄISCHER RECHERCHENBERICHT**

Nummer der Anmeldung

EP    91 11 0592
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | IEEE INTERNATIONAL CONFERENCE ON COMMUNICATIONS Bd. 3, 11. Juni 1989, BOSTON (US) Seiten 1413 - 1417; FUJI ET AL: 'Study on subscriber line circuits applicable for analogue telephone and ISDN interfaces' * Das ganze Dokument * --- | 1-4 | H04Q11/04 |
| A | FR-A-2 652 976 (JS TELECOM) * Seite 1, Zeile 16 - Zeile 30 * * Seite 2, Zeile 26 - Seite 3, Zeile 19 * * Seite 6, Zeile 4 - Zeile 9 * * Seite 7, Zeile 7 - Zeile 16 * --- | 1-4 | |
| A | EP-A-0 229 378 (A.T.&T.) * Seite 3, Zeile 23 - Zeile 35 * * Seite 4, Zeile 15 - Seite 5, Zeile 25 * * Seite 6, Zeile 2 - Zeile 23 * * Seite 18, Zeile 1 - Seite 19, Zeile 24 * --- | 1-4 | |
| A | NACHRICHTEN TECHNIK ELEKTRONIK. Bd. 40, Nr. 12, Dezember 1990, BERLIN DD Seiten 463 - 466; VOLLMER: 'Die Siemens-ISDN-Chipfamilie' * Seite 463, rechte Spalte, Zeile 39 - Zeile 42 * --- | 1-4 | **RECHERCHIERTE SACHGEBIETE (Int. Cl.5)** H04Q H04M |
| A | NTZ NACHRICHTECHNISCHE ZEITSCHRIFT. Bd. 43, Nr. 9, September 1990, BERLIN DE Seiten 682 - 684; STRAFNER ET AL: 'IOM2 - Die universelle Schnittstelle für ISDN-ic' * Das ganze Dokument * --- -/-- | 1-4 | |

Der vorliegende Recherchenbericht wurde für alle Patentansprüche erstellt

| Recherchenort | Abschlußdatum der Recherche | Prüfer |
|---|---|---|
| DEN HAAG | 19 FEBRUAR 1992 | DE MUYT H.A. |

Europäisches
Patentamt

EUROPÄISCHER RECHERCHENBERICHT

Nummer der Anmeldung

EP    91 11 0592
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | IEEE GLOBAL TELECOMMUNICATIONS CONFERENCE & EXHIBITION<br>Bd. 3, 28. November 1988, HOLLYWOOD<br>Seiten 1211 - 1220;<br>SKAPERDA: 'The EWSD today, plans for tomorrow'<br>* Seite 1215, linke Spalte, Zeile 35 - Zeile 42 *<br><br>--- | 1,2 | |
| A | ONDE ELECTRIQUE.<br>Bd. 67, Nr. 2, März 1987, PARIS FR<br>Seiten 57 - 63;<br>LERACH: 'Une famille VLSI performante pour les futurs centraux du R.N.I.S.'<br>* Seite 58, linke Spalte, Zeile 14 - Zeile 19 *<br>* Seite 58, rechte Spalte, Zeile 1 - Zeile 14 *<br>* Seite 59, linke Spalte, Zeile 8 - Zeile 14 *<br><br>----- | 1-4 | |

RECHERCHIERTE
SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 19 FEBRUAR 1992 | DE MUYT H.A. |